# EUROPÄISCHE PATENTSCHRIFT

(11) **EP 1 432 920 B1**
(45) Veröffentlichungstag und Bekanntmachung des Hinweises auf die Patenterteilung: **17.08.2005**
(21) Anmeldenummer: 02779132.6
(22) Anmeldetag: 27.09.2002
(51) Int. Cl.: F16C 11/06

(54) **KUGELGELENK**
BALLJOINT
JOINT A ROTULE

(30) Priorität: 04.10.2001 DE 20116358 U
(43) Veröffentlichungstag der Anmeldung: 30.06.2004
(73) Patentinhaber: ZF Lemförder Metallwaren AG, 49441 Lemförde (DE)
(72) Erfinder: HEIDEMANN, Manfred, 49191 Belm-Vehrte (DE); BOHNE, Manfred, 49448 Quernheim (DE); PRINS, Hans, 49401 Damme (DE); GRÄBER, Jürgen, 32351 Stemwede-Dielingen (DE); REMME, Guido, 49565 Bramsche (DE)
(86) Internationale Anmeldenummer: PCT/DE2002/003661
(87) Internationale Veröffentlichungsnummer: WO 2003/031834

(56) Entgegenhaltungen:
- DE-A- 10 005 979
- US-A- 5 066 159
- US-A- 5 154 530
- US-A- 5 653 545
- US-A- 5 678 947

## Beschreibung

Die Erfindung betrifft ein Kugelgelenk, insbesondere für Lenkungen und/oder Radaufhängungen von Kraftfahrzeugen mit einem Gelenkzapfen, welcher in einer ein- oder mehrteiligen Lagerschale dreh- und kippbar innerhalb eines Gelenkgehäuses aufgenommen ist, wobei die Lagerschale durch einen Verschlussring im Gelenkgehäuse festgelegt ist.

Kugelgelenke der eingangs geschilderten gattungsgemäßen Art werden in hoher Stückzahl in allen Bereichen der Technik, insbesondere auch in der Kraftfahrzeugindustrie in unterschiedlicher Ausgestaltung und Größe eingesetzt. Der Herstellvorgang derartiger Kugelgelenke erfolgt in der Regel dadurch, dass zunächst durch eine Montageöffnung im Gelenkgehäuse die Lagerschale zusammen mit dem Kugelzapfen eingesetzt werden. Verschlossen wird das Gelenkgehäuse anschließend durch einen Verschlussring, der mittels eines Verrollungsvorganges formschlüssig mit dem Gelenkgehäuse verbunden wird. Bei den geschilderten Montageschritten besteht insbesondere hinsichtlich der Verbindung zwischen Verschlussring und Gelenkgehäuse mitunter das Problem, dass der Verschlussring, welcher gleichzeitig die Lagerschale im Gelenkgehäuse verdrehfest positionieren soll auf Grund bestehender Toleranzen nicht an einer dafür vorgesehenen Schulter des Gelenkgehäuses zur Anlage kommt. Dieses Problem führt zwangsläufig dazu, dass ein Gehäusespalt entsteht, durch den nach Beendigung des Fertigungsprozesses unter Umständen Feuchtigkeit sowie Verunreinigungen in das Innere des Kugelgelenkes eindringen können, da die durch den Verrollungsvorgang herstellte formschlüssige Verbindung zwischen Verschlussring und Gelenkgehäuse keine absolute Dichtungsfunktion übernehmen kann. Eindringende Feuchtigkeit sowie Verunreinigungen führen im Kugelgelenk zu einer erhöhten Reibung und verringern gegebenenfalls die Lebensdauer der betroffenen Kugelgelenke äußerst nachhaltig.

Aufgabe der vorliegenden Erfindung ist es, ausgehend von den geschilderten Nachteilen des Standes der Technik bei einem Kugelgelenk der gattungsgemäßen Art durch einen besseren Dichtungsschutz zwischen Verschlussring und Gelenkgehäuse eine Herabsetzung der Lebensdauer in Folge eindringender Feuchtigkeit und Verunreinigungen auszuschließen und einen verbesserten Toleranzausgleich während der Montage des Kugelgelenkes zu erreichen.

Diese Aufgabe wird erfindungsgemäß zusammen mit den gattungsbildenden Merkmalen des Anspruches 1 durch die im kennzeichnenden Teil vermittelte technische Lehre gelöst.

Die offenbarte technische Lehre zeichnet sich insbesondere dadurch aus, dass zwischen Verschlussring und Gelenkgehäuse ein metallisches Stauchelement angeordnet ist, welches im Zusammenbauzustand des Kugelgelenkes eine dichtende Anlagefläche zwischen Gelenkgehäuse und Verschlussring bereitstellt. Das angesprochene Stauchelement wird während des Einpressvorganges zur Herstellung der formschlüssigen Verbindung zwischen Gelenkgehäuse und Verschlussring so verformt, dass unter allen gegebenen Toleranzbedingungen immer eine metallische Anlage zwischen den miteinander verbundenen Bauelementen des Kugelgelenkes hergestellt ist. Darüber hinaus kann auf Grund der speziellen Gestaltung des Stauchelementes eine zusätzliche Axialabstützung des Verschlussringes am Gelenkgehäuse herbeigeführt werden.

Besondere Ausgestaltungen des Erfindungsgegenstandes ergeben sich auch aus den besonderen Merkmalen der Unteransprüche.

Es hat sich zur Lösung der Aufgabe insbesondere als vorteilhaft erwiesen, das Stauchelement als konzentrisch umlaufende Dichtlippe auszuführen. Die umlaufende Dichtlippe ist dabei an einer axialen Querschnittsfläche des Verschlussringes oder des Gehäuses vorstehend angeordnet. Diese Gestaltung erlaubt eine besonders einfache Herstellung des Stauchelementes, da dieses zusammen mit dem Gelenkgehäuse oder dem Verschlussring in einem Arbeitsgang ausgeformt werden kann. Die Verformbarkeit des Stauchelementes und die daraus resultierende Dichtwirkung kann dadurch optimiert werden, dass das als Dichtlippe ausgeführte Stauchelement in seiner Querschnittsform so ausgebildet ist, dass seine Breite sehr viel geringer ist als seine über die axiale Querschnittsfläche vorstehende Höhe.

Die Anordnung des Stauchelementes selbst kann sowohl am Verschlussring als auch am Gelenkgehäuse vorgenommen werden, je nachdem, welche übrigen geometrischen Bedingungen bei der Herstellung und Montage zu berücksichtigen sind.

Im Folgenden wird ein Ausführungsbeispiel des Gegenstandes der Erfindung anhand der beigefügten Merkmale näher erläutert. Es zeigt:
- Figur 1: eine Längsschnittdarstellung durch ein erfindungsgemäßes Kugelgelenk und
- Figur 2: eine vergrößerte Darstellung des erfindungsgemäßen Teilbereiches aus Figur 1.

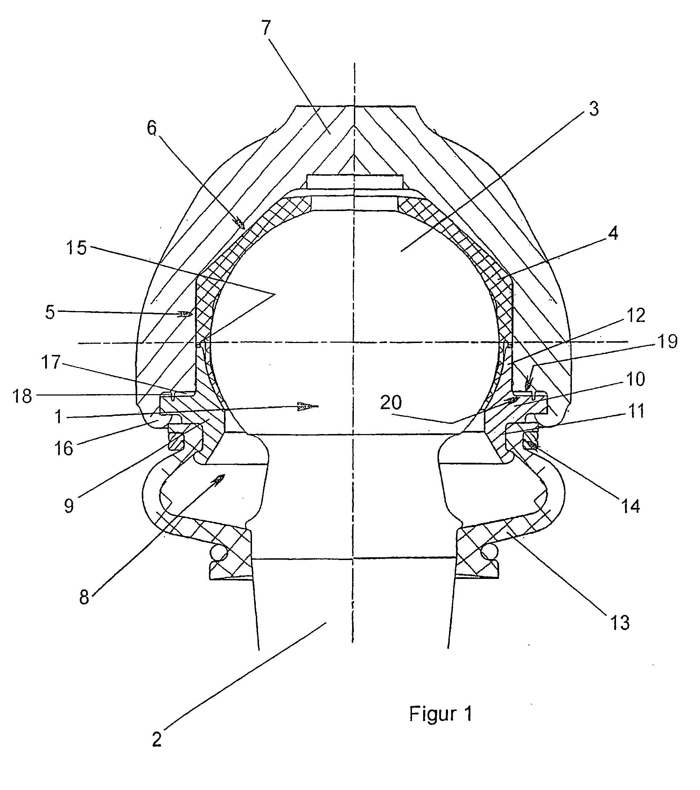

Das in der Figur 1 dargestellte Kugelgelenk besteht aus einem Gelenkzapfen 1, der in an sich bekannter Weise einen Zapfenbereich 2 und eine daran angeformte Gelenkkugel 3 aufweist. Der Gelenkzapfen 1 ist mit seiner Gelenkkugel 3 in einer Lagerschale 4 aus einem elastischen Material gelagert. Die Innenkontur der Lagerschale 4 ist hierbei der Gelenkkugel 3 angepasst. Die Lagerschale 4 weist an ihrer Außenkontur eine zylindrische Mantelfläche 5 sowie eine im Winkel von ungefähr 45° dazu abgewinkelte Mantelfläche 6 auf, mit denen die Lagerschale 4 in einem Gelenkgehäuse 7 aufgenommen ist. Das Gelenkgehäuse 7 ist am oberen gelenkkugelseitigen Ende des Gelenkzapfens 1 geschlossen und weist an seiner gegenüberliegenden Seite eine Öffnung 8 auf, durch die die Lagerschale 4 zusammen mit dem Gelenkzapfen 1 in das Gelenkgehäuse 7 einführbar ist. Sind die angesprochenen Bauelemente während des Herstellvorganges an ihrem dafür vorgesehenen Platz montiert, so wird die Öffnung 8 des Gelenkgehäuses 7 mittels eines Verschlussringes 9 geschlossen. Der Verschlussring besitzt eine rotationssymmetrische Form mit einem ringförmigen Kernbereich 10 sowie zwei unterschiedlich geformten, in Richtung des Zapfenbereiches 2 sowie der Gelenkkugel 3 vorstehenden Endbereichen 11 und 12. Der Endbereich 11 dient hierbei zur Aufnahme eines Dichtungs- oder Gummibalges 13, welcher in einer umlaufenden Nut 14 des Verschlussringes aufgenommen ist und zur Abdichtung des Zapfenbereiches 2 gegenüber dem Gelenkkugelbereich 3 innerhalb des Gelenkgehäuses 7 dient.

Der gegenüberliegende Endbereich 12 liegt mit seinem als Schulter 15 ausgebildeten freien Ende an einer umlaufenden Schulter der Lagerschale 4 an und fixiert diese innerhalb des Gelenkgehäuses 7 in axialer Richtung. Bei der Montage des Gelenkzapfens 1 zusammen mit der Lagerschale 4 im Gelenkgehäuse 7 verschließt der Verschlussring 9 nach dem Einführen der oben angeführten Bauteile die Öffnung 8 und wird mittels eines geeigneten Einpress- oder Verrollungswerkzeuges innerhalb des Gelenkgehäuses 7 fixiert. Im Rahmen des Verrollungsvorganges wird am unteren, dem Zapfenbereich 2 zugewandten Ende des Gelenkgehäuses eine umlaufende Verrollungskante 16 hergestellt, an der eine Fläche des nach außen vorstehenden Kernbereiches 10 des Verschlussringes 9 zur Anlage kommt. Die axiale Fixierung des Verschlussringes 9 in entgegengesetzter Axialrichtung erfolgt wie oben bereits geschildert durch die Anlage des Verschlussringes 9 an der Schulter der Lagerschale 4.

Wie aus der Figur 1 ersichtlich, besteht nach der Montage zwischen dem Gelenkgehäuse 7 und dem Verschlussring 9 ein Spalt 17, welcher erfindungsgemäß mittels eines Stauchelementes 18 verschlossen ist. Das Stauchelement 18 ist Bestandteil des Gelenkgehäuses 7 und steht über eine axiale Querschnittsfläche 19 hervor. Alternativ hierzu kann das Stauchelement jedoch auch an der gegenüberliegenden Axialfläche 20 des Verschlussringes 9 angeordnet werden. Wesentliche Aufgabe dieses Stauchelementes 18 ist die Abdichtung des Spaltes 17 zwischen Gelenkgehäuse 7 und Verschlussring 9. Dies geschieht durch die metallische Anlage des Stauchelementes an der jeweils gegenüber liegenden Axialfläche, welche wiederum durch eine leichte Verformung des Stauchelementes im Rahmen des Verrollungsvorganges beim Verschließen des Kugelgelenkes herbeigeführt wird.

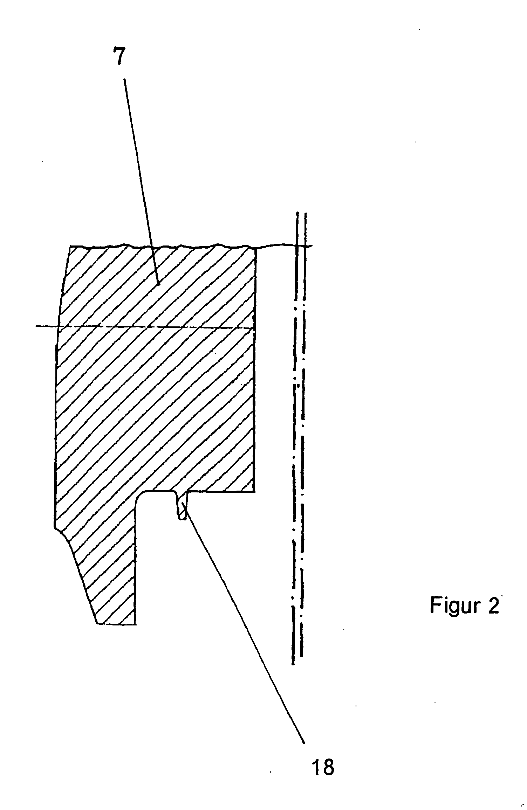

Die besondere Form des Stauchelementes 18 wird aus der Detaildarstellung der Figur 2 deutlich. Das Stauchelement ist in Form einer Dichtlippe gestaltet, deren Breite wesentlich geringer ist als die über die axiale Querschnittsfläche 19 des Gelenkgehäuses 7 vorstehende Höhe. Durch diese geometrische Gestaltung und die gewählte Höhe der Dichtlippe, durch die beim Herstellvorgang der Verschlussring zuerst an der Dichtlippe und nach Verformung der Dichtlippe im Rahmen des Verrollungsvorganges erst an der Schulter 15 der Lagerschale 4 zur Anlage kommt, ist immer ein metallischer Anschlag zwischen Gelenkgehäuse 7 und Verschlussring 9 gewährleistet und somit eine Dichtungsfunktion herbeigeführt. Durch die geringe Breite des Stauchelementes 18 besteht für die während des Verrollungsvorganges notwendige Verformung des Stauchelementes kein besonderer zusätzlicher Kraftbedarf.

### Bezugszeichenliste

- 1.: Gelenkzapfen
- 2.: Zapfenbereich
- 3.: Gelenkkugel
- 4.: Lagerschale
- 5.: Mantelfläche
- 6.: Mantelfläche
- 7.: Gelenkgehäuse
- 8.: Öffnung
- 9.: Verschlussring
- 10.: Kembereich
- 11.: Endbereich
- 12.: Endbereich
- 13.: Gummibalg
- 14.: Nut
- 15.: Schulter
- 16.: Verrollungskante
- 17.: Spalt
- 18.: Stauchelement (Dichtlippe)
- 19.: Axialfläche
- 20.: Axialfläche

## Patentansprüche

1. Kugelgelenk, insbesondere für Lenkungen und/oder Radaufhängungen von Kraftfahrzeugen mit einem Gelenkzapfen (1), welcher in einer ein- oder mehrteiligen Lagerschale (4) dreh- und kippbar innerhalb eines Gelenkgehäuses (7) aufgenommen ist, wobei die Lagerschale (4) durch einen Verschlussring (9) im Gelenkgehäuse (7) festgelegt ist,
**dadurch gekennzeichnet, dass**
zwischen Verschlussring (9) und Gelenkgehäuse (7) ein metallisches Stauchelement (18) angeordnet ist, welches im Zusammenbauzustand des Kugelgelenkes eine dichtende Anlagefläche zwischen Gelenkgehäuse (7) und Verschlussring (9) bereitstellt.

2. Kugelgelenk nach Anspruch 1,
**dadurch gekennzeichnet, dass**
das Stauchelement (18) als umlaufende Dichtlippe ausgeführt ist.

3. Kugelgelenk nach Anspruch 2,
**dadurch gekennzeichnet, dass**
die umlaufende Dichtlippe (18) an einer Querschnittsfläche (19) des Gelenkgehäuses (7) vorstehend angeordnet ist.

4. Kugelgelenk nach Anspruch 2,
**dadurch gekennzeichnet, dass**
die umlaufende Dichtlippe (18) an einer Querschnittsfläche (20) des Verschlussringes (9) vorstehend angeordnet ist.

5. Kugelgelenk nach einem der Ansprüche 2 bis 4,
**dadurch gekennzeichnet, dass**
die Dichtlippe (18) in ihrer Querschnittsform so ausgebildet ist, dass ihre Breite sehr viel geringer ist als ihre über die Querschnittsfläche (19, 20) vorstehende Höhe.

6. Kugelgelenk nach einem der Ansprüche 1 bis 5,
**dadurch gekennzeichnet, dass**
das Stauchelement (18) an dem Verschlussring (9) angeordnet ist.

7. Kugelgelenk nach einem der Ansprüche 1 bis 5,
**dadurch gekennzeichnet, dass**
das Stauchelement (18) am Gelenkgehäuse (7) angeordnet ist.

## Claims

1. Ball joint, in particular for steering assemblies and/or wheel suspensions of motor vehicles, with a joint pin (1) which is held in a one- or multi-part bearing shell (4) so as to be rotatable and tiltable inside a joint housing (7), wherein the bearing shell (4) is secured in the joint housing (7) by a closing ring (9),
**characterised in that**
a metallic compression element (18) is disposed between the closing ring (9) and the joint housing (7), which element provides a sealing contact face between the joint housing (7) and the closing ring (9) once the ball joint has been assembled.

2. Ball joint according to Claim 1,
**characterised in that**
the compression element (18) is in the form of an encircling sealing lip.

3. Ball joint according to Claim 2,
**characterised in that**
the encircling sealing lip (18) is disposed in projecting fashion at a cross-sectional area (19) of the joint housing (7).

4. Ball joint according to Claim 2,
**characterised in that**
the encircling sealing lip (18) is disposed in projecting fashion at a cross-sectional area (20) of the closing ring (9).

5. Ball joint according to any one of Claims 2 to 4,
**characterised in that**
the sealing lip (18) has a cross-sectional shape which is such that its width is far less than its height which projects beyond the cross-sectional area (19, 20).

6. Ball joint according to any one of Claims 1 to 5,
**characterised in that**
the compression element (18) is disposed at the closing ring (9).

7. Ball joint according to any one of Claims 1 to 5,
**characterised in that**
the compression element (18) is disposed at the joint housing (7).

## Revendications

1. Joint à rotule, notamment pour des directions et/ou des suspensions de roues de véhicules automobiles, comportant un pivot (1), qui est logé dans un coussinet de palier (4) formé d'un ou de plusieurs éléments, de manière à pouvoir tourner et basculer à l'intérieur d'un boîtier (7) du joint, le coussinet de palier (4) étant fixé par une bague de fermeture (9) dans le boîtier (7) du joint, **caractérisé en ce qu'**entre la bague de fermeture (9) et le boîtier (7) du joint est disposé un élément de compression métallique (18) qui, lorsque le joint à rotule est à l'état assemblé, fournit une surface d'application d'étanchéité entre le boîtier (7) du joint et la bague de fermeture (9).

2. Joint à rotule selon la revendication 1, **caractérisé en ce que** l'élément de compression (18) est agencé sous la forme d'une lèvre d'étanchéité périphérique.

3. Joint à rotule selon la revendication 2, **caractérisé en ce que** la lèvre d'étanchéité périphérique (18) est disposée de manière à être en saillie sur une surface en coupe transversale (19) du boîtier (7) du joint.

4. Joint à rotule selon la revendication 2, **caractérisé en ce que** la lèvre d'étanchéité périphérique (18) est disposée de manière à faire saillie sur une surface en coupe transversale (20) de la bague de fermeture (9).

5. Joint à rotule selon l'une des revendications 2 à 4, **caractérisé en ce que** la forme en coupe transversale de la lèvre d'étanchéité (18) est choisie de telle sorte que sa largeur est très inférieure à sa hauteur de saillie au-dessus de la surface en coupe transversale (19, 20).

6. Joint à rotule selon l'une des revendications 1 à 5, **caractérisé en ce que** l'élément de compression (18) est disposé sur la bague de fermeture (9).

7. Joint à rotule selon les revendications 1 à 5, **caractérisé en ce que** l'élément de compression (18) est disposé sur le boîtier (7) du joint.
